# EUROPÄISCHE PATENTSCHRIFT

(11) **EP 3 961 160 B1**
(45) Veröffentlichungstag und Bekanntmachung des Hinweises auf die Patenterteilung: **19.07.2023**
(21) Anmeldenummer: 21000220.0
(22) Anmeldetag: 09.08.2021
(51) Int. Cl.: G01D 11/24, H03K 17/00

(54) **SENSORGEHÄUSE**
SENSOR CASING
BOÎTIER DE CAPTEUR

(30) Priorität: 26.08.2020 DE 102020005216
(43) Veröffentlichungstag der Anmeldung: 02.03.2022
(73) Patentinhaber: Pepperl+Fuchs SE, 68307 Mannheim (DE)
(72) Erfinder: Berg, Eckhard, 67269 Grünstadt (DE)
(74) Vertreter: Koch Müller Patentanwaltsgesellschaft mbH

(56) Entgegenhaltungen:
- DE-A1- 2 819 782
- DE-A1- 2 915 109
- DE-U1-202014 103 822
- US-A- 4 090 091
- US-A- 4 225 748
- US-A- 4 654 471

## Beschreibung

Die Erfindung betrifft ein Sensorgehäuse umfassend ein Kopfteil mit einem Sensorraum zur Aufnahme eines Sensors und ein Anschlussteil mit einem Klemmraum zur Aufnahme eines Klemmanschlussblocks.

Ein gattungsgemäßes Sensorgehäuse mit einem Messkopfteil und einem aus einem Unterteil und einem Oberteil aufgebauten Anschlussteil ist aus der DE 28 19 782 A1 bekannt. In dem Unterteil ist als Klemmenanschlussblock ein Buchsenteil mit Buchsen angeordnet. Dieses Buchsenteil weist auf einer Unterseite Kabeleinführungskanäle auf, über die eine durch die Kabelöffnung geführtes Anschlusskabel mit den Buchsen elektrisch verbunden wird. Das Oberteil weist ein Auswertegeräteteil auf, welches über in die Buchsen eingeführte Stecker mit dem Buchsenteil verbunden wird. Das Messkopfteil wird über Anschlussleitungen mit Kontaktstiften elektrisch verbunden, wodurch ein elektrischer Kontakt mit dem Auswertegeräteteil hergestellt wird. Für den Zusammenbau des Sensorgehäuses wird das Oberteil auf das Unterteil in Schließrichtung aufgesetzt, so dass dabei senkrecht zur Schließrichtung verlaufende Ebenen von Rändern des Oberteils und des Unterteils eine Dichtung zwischen sich aufnehmen.

Eine typische Bauform von Sensoren, wie induktiven oder kapazitativen Näherungssensoren, umfasst ein zweiteiliges Gehäuse. Der Sensor ist in einem Kopfteil angeordnet und in einem Anschlussteil wird eine Kontaktiervorrichtung, z.B. ein Klemmanschlussblock, zum Anschließen eines von außen kommenden Kabels angeordnet. Das Anschlussteil bzw. der von dem Anschlussteil umfasste Raum wird daher häufig auch als Klemmraum bezeichnet.

Der Sensor in dem Kopfteil ist durch elektrische Verbindungen mit der Kontaktiervorrichtung verbunden, wofür das Kopfteil und das Anschlussteil entsprechende Durchgangsöffnungen und gegebenenfalls weitere Kontaktiervorrichtungen, wie z.B. Kontaktstifte, umfassen.

Um einen Zugang zu dem Klemmraum zu ermöglichen, besteht das Anschlussteil typischerweise aus einem Unterteil und einem Deckel. Bekannt ist, das Unterteil und den Deckel entlang von senkrecht zu einer Fügerichtung verlaufenden Fügeflächen zusammenzusetzen. Ferner ist bekannt, zu Abdichtungszwecken auf einer der Fügeflächen eine umlaufende Dichtung, z.B. einen Gummiring oder eine umlaufende Flachdichtung, anzuordnen. Verschiedene Ausführungen zu Dichtvorrichtungen sind aus Haas, W: Grundlehrgang Dichtungstechnik. 2009-07-20. URL: https://www.ima.uni-stuttgart.de/dokumente/forschung/dichtungstechnik/skript_dichtungstechnik. pdf, bekannt.

Einen entsprechenden Aufbau weisen beispielsweise der induktive Näherungssensors NBB20-U1-UU oder der kapazitiven Sensors CJ15+U1+A2 der Fa. Pepperl + Fuchs AG auf. Die Verbindung zwischen dem Deckel und dem Unterteil wird durch insgesamt drei Schrauben fixiert.

Auch die Standardbauform der Baureihe IQ40 der Fa. SICK AG ist ähnlich aufgebaut.

Nachteilig an diesem Aufbau ist, dass die Belastung bzw. die auf die Dichtung wirkende Kraft direkt von der Schraubverbindung abhängt. Hierdurch besteht außerdem die Gefahr, dass die Kraft entlang der Dichtung deutlich variiert.

Des Weiteren beschreibt die US 4 090 091 A ein Gehäuse mit einer ein Sensorgehäuse aufweisendes Kopfteil für einen Schaltkreis und ein Sensorelement. Das Gehäuse umfasst ein Unterteil und einen Deckel, welcher mittels Schrauben mit dem Unterteil verbunden wird. Um den Innenraum des Unterteils verläuft eine Nut, in welche ein an der Unterseite des Deckels angeordneter Steg eingreift, wenn die Unterseite des Deckels an der oberen Fläche des Unterteils anliegt. Diese Nut weist auf deren Nutgrund eine Dichtung auf, so dass durch das Einsetzen des Steges in die Nut ein Druck gegen die Dichtung erzeugt und infolgedessen eine Wasserdichtigkeit erreicht wird.

Aus der DE 29 15 109 A1 ist ein Gehäuse aus einem Ober- und einem Unterteil bekannt, welches mit einem Kopfteil verbunden wird. Dieses bekannte Gehäuse zur Aufnahme eines Näherungssensor. Zur Montage des Gehäuses wird das Oberteil auf das Unterteil in Schließrichtung aufgesetzt, wobei eine Dichtung die Abdichtung zwischen dem Ober- und Unterteil übernimmt. Die zugehörigen Dichtflächen des Ober- und Unterteils verlaufen dabei senkrecht zur Schließrichtung.

Vor diesem Hintergrund besteht die Aufgabe der Erfindung darin, ein Sensorgehäuse mit einem zuverlässigen und möglichst benutzerunabhängigen und werkzeuglos bedienbaren Mechanismus für ein vereinfachtes Verbinden und ein verbessertes Abdichten zwischen dem Deckel und Unterteil des Anschlussteils bereitzustellen.

Die Aufgabe wird durch eine Vorrichtung mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Sensorgehäuse bereitgestellt, umfassend ein Kopfteil mit einem Sensorraum zur Aufnahme eines Sensors und ein an das Kopfteil angrenzendes Anschlussteil mit einem Klemmraum zur Aufnahme eines Klemmanschlussblocks, wobei das Kopfteil in einer an das Anschlussteil angrenzenden Rückwand eine Durchgangsöffnung zur Durchführung von elektrischen Verbindungen, z.B. Kabel-und/oder Steckerdurchführung in den Sensorraum aufweist.

Das Anschlussteil umfasst ein Klemmraumunterteil und einen Klemmraumdeckel, wobei das Klemmraumunterteil und der Klemmraumdeckel in einer Schließrichtung zusammengesetzt sind, so dass das Klemmraumunterteil und der Klemmraumdeckel aneinander angrenzen und den Klemmraum umschließen. Der Klemmraumdeckel ist mittels eines Verbindungsmittels mit dem Kopfteil verbunden.

Der Klemmraumdeckel weist eine an die Rückwand des Kopfteils angrenzende Seitenwand mit einer mit der Durchgangsöffnung des Kopfteils zumindest überlappenden Durchgangsöffnung zur Durchführung von elektrischen Verbindungen. z.B. Kabel- und/oder Steckerdurchführung von dem Sensorraum in den Klemmraum auf.

Das Klemmraumunterteil weist eine Seitenwand mit einer Eingangsöffnung zur Kabel- und/oder Steckerdurchführung auf.

Der Klemmraumdeckel und das Klemmraumunterteil weisen jeweils eine Dichtfläche auf, wobei die Dichtflächen einander zugewandt sind und parallel oder in einem Winkel von höchstens 3° oder höchstens 1,5° zueinander verlaufen.

Zwischen der Dichtfläche des Klemmraumdeckels und der Dichtfläche des Klemmraumunterteils ist ein umlaufendes Dichtelement zum Abdichten des Klemmraums angeordnet.

Die Dichtflächen verlaufen außerdem jeweils entlang einer geschlossen Kurve um eine parallel zu der Schließrichtung verlaufende Mittelachse des Anschlussteils herum und in einem Winkel von mindestens 0° und höchstens 45° oder höchstens 30° oder höchstens 20° zu der Längsachse, so dass ein Abstand zwischen jeder Dichtfläche und der Längsachse in Schließrichtung konstant ist oder abnimmt.

Es versteht sich, dass die Begriffe Klemmraumunterteil und Klemmraumdeckel keine Ausrichtung des Anschlussteils bzw. keine Position/Ausrichtung der beiden Teile des Anschlussteils vorgeben. Die Begriffe dienen lediglich zur Unterscheidung bzw. zur Kennzeichnung der beiden Teile des zweiteiligen Anschlussteils.

Es versteht sich auch, dass der Klemmraumdeckel und das Klemmraumunterteil jeweils Kanten und/oder Flächen aufweisen, entlang derer sie zusammengesetzt bzw. zusammengefügt werden können.

Der aufzunehmende Klemmanschlussblock ist beispielsweise als separates Bauteil ausgebildet und in dem Klemmraum anordenbar. Alternativ ist der Klemmanschlussblock beispielsweise mit dem Klemmraumunterteil einstückig ausgebildet.

Die Fügeflächen des Klemmraumdeckels liegen nach dem Fügen auf den Fügeflächen des Klemmraumunterteils auf, so dass der Klemmraumdeckel und das Klemmraumunterteil den Klemmraum bis auf die Öffnungen zur Durchführung von elektrischen Verbindungen, wie z.B. Kabel- und/oder Steckerdurchführungen umschließen.

Als Dichtfläche werden Flächen bezeichnet, die nach dem Zusammensetzen nicht wie Fügeflächen aneinander anliegen, sondern durch ein Dichtelement zueinander beabstandet sind.

Es versteht sich weiter, dass die Schließrichtung, also die Richtung in der der Klemmraumdeckel auf das Klemmraumunterteil aufgesetzt wird oder vice versa, und die Ausrichtung der Füge- und Dichtflächen einander bedingen. Insbesondere sind Hinterschneidungen hinsichtlich der Schließrichtung zu vermeiden.

In einer besonders einfachen Ausführungsform besteht das Anschlussteil aus einem quaderförmigen Körper mit einem im Wesentlichen zylinderförmigen Hohlraum als Klemmraum, z.B. mit einer ovalen Grundfläche, wobei das Klemmraumunterteil die untere Hälfte des Körpers, der Klemmraumdeckel die obere Hälfte des Körpers umfasst.

Insbesondere umfassen Klemmraumdeckel und Klemmraumunterteil jeweils als Vertiefung einen Teil des Klemmraums. Die Trenn- oder Schnittflächen, also die aneinander angrenzenden Kantenflächen der die zylinderförmige Ausnehmung umgebenden Seitenwände, bilden die Fügeflächen.

Die Dichtflächen bilden in einer besonders einfachen Ausführungsform einen oberen Randabschnitt der Innenfläche der Vertiefung im Klemmraumunterteil einerseits und eine Außenfläche eines in die Vertiefung des Klemmraumunterteils hineinragenden Verbindungsteils des Klemmraumdeckels, wobei der Verbindungsabschnitt als ein dünner Wandabschnitt in Verlängerung der Vertiefung über die weitere Seitenflächen des Klemmraumdeckels hinausragt.

Es versteht sich, dass alternativ ebenso einfach ein Verbindungsteil an dem Klemmraumunterteil angeordnet ist und zum Abdichten in die Vertiefung des Klemmraumdeckels hineinragt.

Durch Dichtflächen, die parallel oder zumindest in einem spitzen Winkel verlaufen, wirkt das Dichtelement insbesondere radial zu der Mittelachse. Die Dichtwirkung ist dadurch unabhängiger von einer in Schließrichtung, also parallel zu der Mittelachse wirkenden Kraft zum Verschließen des Anschlussteils, z.B. durch Verschrauben der beiden Bauteile.

Insbesondere ist die Wirkung des Dichtelements damit unabhängig von einem Anzugsmoment einer Verschraubung und damit auch unabhängig von der Handhabung bzw. dem Anwender.

Die auf das Dichtelement wirkende Anpresskraft ist dagegen abhängig von den Abmessungen des Gehäuses, insbesondere der Dichtflächen, und kann dadurch gut reproduziert werden.

Darüber hinaus werden Spannungsspitzen, insbesondere punktuell auftretende Spannungsspitzen, z.B. in der unmittelbaren Umgebung einer Befestigungsschraube, vermieden, wodurch auch lokale Veränderungen des Dichtelements, z.B. aufgrund von plastischer Verformung, vermieden werden. Die Qualität der Dichtwirkung des erfindungsgemäßen Sensorgehäuses wird so über eine lange Gebrauchsdauer aufrechterhalten.

Gemäß einer ersten Ausführungsform weist die Dichtfläche des Klemmraumdeckels oder die Dichtfläche des Klemmraumunterteils eine Nut zur Aufnahme des Dichtelements auf.

In einer anderen Ausführungsform ist jede Dichtfläche als Mantelfläche eines Zylinders oder eines Kegelstumpfs ausgebildet.

Es versteht sich, dass jede Zylinderform oder Kegelstumpfform umfasst ist.

Insbesondere kann es sich sowohl um einen geraden oder schiefen Zylinder bzw. Kegelstumpf handeln und die Grundfläche eine beliebige Form aufweisen. Gemäß einer Weiterbildung ist die Grundfläche des Zylinders oder Kegelstumpfs abgerundet, bevorzugt oval.

Die Grundfläche ist senkrecht oder in einem Winkel zu der Mittelachse ausgerichtet. Ein abgerundeter stetiger innerer bzw. äußerer Umfang der Dichtflächen ermöglicht es, mit einem dem Umfang folgenden radialen Dichtelement eine gute Dichtigkeit zu erreichen.

Insbesondere wirkt durch diese Form eine möglichst gleichmäßige Anpresskraft auf das Dichtelement, wobei die Anpresskraft im Wesentlichen von den Abmessungen bzw. der Form der Gehäuseteile abhängt.

Gemäß einer weiteren Ausführungsform umschließen die Dichtflächen in einer Projektion entlang der Mittelachse jeweils eine Fläche, wobei die Fläche kreisförmig oder oval ausgebildet ist.

In einer anderen Weiterbildung ist eine der Dichtflächen als Verlängerung einer Innenfläche des Klemmraums ausgebildet. Anders ausgedrückt, die Innenfläche des Klemmraums bzw. ein oberer Randabschnitt der Innenfläche einer Ausnehmung in dem Klemmraumunterteil oder dem Klemmraumoberteil, dient als Dichtfläche, wobei die Ausnehmung einen Teil des Klemmraums ausbildet.

Gemäß einer weiteren Weiterbildung entspricht das Sensorgehäuse dem IP 68 Standard oder dem IP 69K Standard.

In einer anderen Ausführungsform weist ein induktiver oder kapazitiver Näherungssensor ein Sensorgehäuse gemäß einem der vorangegangenen Ausführungsformen auf.

In einer Weiterbildung ist im dem Kopfteil wenigstens ein Sensorbauelement angeordnet. Vorzugsweise umfasst das Sensorbauelement einen induktiven und / oder kapazitiven und oder optischen und oder einen Ultraschallsensor. Vorzugsweise besteht das Sensorbauelement aus einen induktiven und / oder kapazitiven und oder optischen und oder einen Ultraschallsensor.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigen, die
- Figur 1: eine seitliche Ansicht einer ersten erfindungsgemäßen Ausführungsform eines Sensorgehäuses in einem geschlossenen Zustand,
- Figur 2: eine Ansicht eines geöffneten Anschlussteils, und
- Figur 3: eine seitliche Ansicht eines Klemmraumdeckels gemäß einer zweiten Ausführungsform.

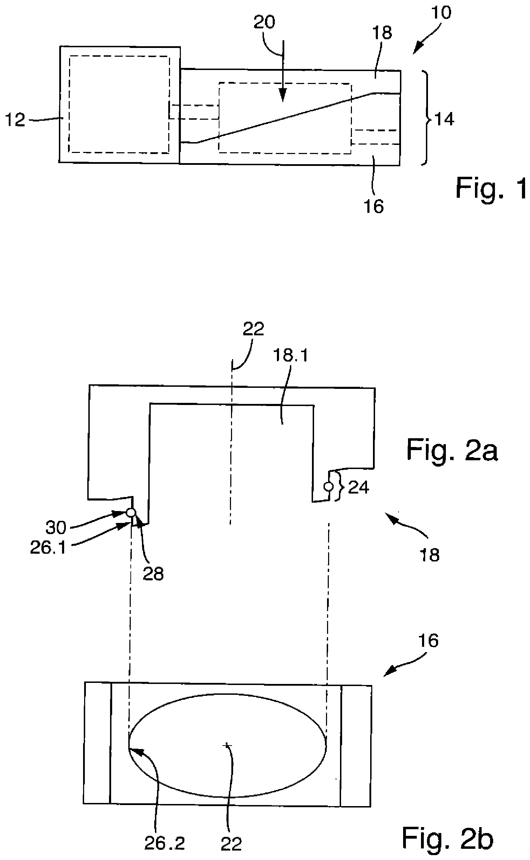

Die Abbildung der Figur 1 zeigt eine seitliche Ansicht einer ersten erfindungsgemäßen Ausführungsform eines Sensorgehäuse 10, umfassend ein Kopfteil 12 mit einem Sensorraum (gestrichelt) zur Aufnahme eines Sensors und ein an das Kopfteil 12 angrenzendes Anschlussteil 14 mit einem Klemmraum (gestrichelt) zur Aufnahme eines Klemmanschlussblocks.

Das Anschlussteil 14 besteht aus einem Klemmraumunterteil 16 und einem Klemmraumdeckel 18, die aneinander angrenzen, den Klemmraum umschließen. Das Klemmraumunterteil 16 und der Klemmraumdeckel 18 können für einen Zugang zu dem Klemmraum durch eine Bewegung entgegen einer Schließrichtung 20 getrennt werden.

Nur gestrichelt angedeutet sind die Durchgangsöffnungen für die elektrischen Verbindungen wie z.B.: Kabel- und/oder Steckerdurchführung zwischen dem Sensorraum und dem Klemmraum bzw. von außen in den Klemmraum.

Hierfür weist eine an das Anschlussteil 14 angrenzende Rückwand des Kopfteils 12 eine erste Durchgangsöffnung und eine an das Kopfteil 12 angrenzende Seitenwand des Klemmraumdeckels 18 eine mit der ersten Durchgangsöffnung zumindest überlappende zweite Durchgangsöffnung auf.

Außerdem weist eine Seitenwand des Klemmraumunterteils 16 eine Eingangsöffnung zur Kabel- und/oder Steckerdurchführung von außen in den Klemmraum auf.

Das Kopfteil 12 ist mittels eines nicht dargestellten Verbindungsmittels mit dem Klemmraumdeckel 18 verbunden.

In der Abbildung der Figur 2 ist das Anschlussteil 14 in geöffnetem Zustand gezeigt, wobei der Klemmraumdeckel 18 in einer Schnittansicht (Abbildungsteil a) und das Klemmraumunterteil 16 in einer Aufsicht (Abbildungsteil b) gezeigt ist.

Der Klemmraumdeckel 18 weist eine Ausnehmung 18.1 mit einer parallel zu der Schließrichtung 20 verlaufenden Mittelachse 22 und in Verlängerung der Ausnehmung 18.1 einen Verbindungsabschnitt 24 auf.

Eine von der Mittelachse 22 abgewandte Außenfläche des Verbindungabschnitts 24 bildet eine Dichtfläche 26.1 des Klemmraumdeckels 18. Die Dichtfläche 26.1 des Klemmraumdeckels 18 verläuft parallel zu der Mittelachse 22, umschließt die Mittelachse 22 vollständig und weist eine Nut 28 auf. In der Nut 28 ist ein Dichtelement 30 angeordnet.

Das Klemmraumunterteil 16 weist eine zylinderförmige Ausnehmung mit einer ovalen Grundfläche und einer senkrecht zu der Mittelachse 22 verlaufenden Mantelfläche auf. Ein oberer Randbereich der Innenfläche der Ausnehmung bildet eine Dichtfläche 26.2 des Klemmraumunterteils 16 aus.

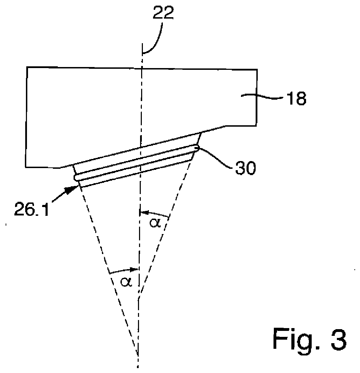

In der Abbildung der Figur 3 ist eine seitliche Ansicht eines Klemmraumdeckels 18 gemäß einer zweiten Ausführungsform dargestellt. Im Folgenden werden nur die Unterschiede zu dem Abbildungsteil (a) der Figur 2 beschrieben.

Die durch die Außenfläche des Verbindungsabschnitts 24 gebildete Dichtfläche 26.1 des Klemmraumdeckels 18 verläuft in einem Winkel α zu der Mittelachse 22. Entsprechend muss auch die Dichtfläche 26.2 des Klemmraumunterteils 16 in demselben Winkel oder einem nur geringfügig abweichenden Winkel zu der Mittelachse 22 verlaufen.

## Patentansprüche

1. Sensorgehäuse (10), umfassend ein Kopfteil (12) mit einem Sensorraum zur Aufnahme eines Sensors und ein an das Kopfteil (12) angrenzendes Anschlussteil (14) mit einem Klemmraum zur Aufnahme eines Klemmanschlussblocks, wobei
- das Kopfteil (12) in einer an das Anschlussteil (14) angrenzenden Rückwand eine Durchgangsöffnung zur Durchführung von elektrischen Verbindungen in den Sensorraum aufweist,
- das Anschlussteil (14) ein Klemmraumunterteil (16) und einen Klemmraumdeckel (18) umfasst,
- das Klemmraumunterteil (16) und der Klemmraumdeckel (18) in einer Schließrichtung (20) zusammengesetzt sind, so dass das Klemmraumunterteil (16) und der Klemmraumdeckel (18) aneinander angrenzen und den Klemmraum umschließen,
- der Klemmraumdeckel (18) mittels eines Verbindungsmittels mit dem Kopfteil (12) verbunden ist,
- der Klemmraumdeckel (18) eine an die Rückwand des Kopfteils (12) angrenzende Seitenwand mit einer mit der Durchgangsöffnung des Kopfteils (12) zumindest überlappenden Durchgangsöffnung zur Durchführung von elektrischen Verbindungen von dem Sensorraum in den Klemmraum aufweist,
- das Klemmraumunterteil (16) eine Seitenwand mit einer Eingangsöffnung zur Kabel- und/oder Steckerdurchführung aufweist,
- der Klemmraumdeckel (18) und das Klemmraumunterteil (16) jeweils eine Dichtfläche (26.1, 26.2) aufweisen, wobei die Dichtflächen (26.1, 26.2) einander zugewandt sind,
- die Dichtflächen (26.1, 26.2) zueinander parallel oder zueinander in einem Winkel von höchstens 3° verlaufen,
- die Dichtflächen (26) jeweils entlang einer geschlossen Kurve um eine parallel zu der Schließrichtung (20) verlaufende Mittelachse (22) des Anschlussteils (14) herum verlaufen, und
- zwischen der Dichtfläche (26.1) des Klemmraumdeckels (18) und der Dichtfläche (26.2) des Klemmraumunterteils (16) ein umlaufendes Dichtelement zum Abdichten des Klemmraums angeordnet ist,
**dadurch gekennzeichnet, dass**
- die Dichtflächen (26.1, 26.2) jeweils in einem Winkel von mindestens 0° und höchstens 45° zu der Mittelachse (22) verlaufen, so dass ein Abstand zwischen jeder Dichtfläche (26.1, 26.2) und der Mittelachse in Schließrichtung (20) konstant ist oder abnimmt.

2. Sensorgehäuse (10) nach Anspruch 1, **dadurch gekennzeichnet, dass** die Dichtfläche (26.1) des Klemmraumdeckels (18) oder die Dichtfläche (26.2) des Klemmraumunterteils (16) eine Nut zur Aufnahme des Dichtelements aufweist.

3. Sensorgehäuse (10) nach Anspruch 1 oder 2, **dadurch gekennzeichnet, dass** jede Dichtfläche (26.1, 26.2) als Mantelfläche eines Zylinders oder eines Kegelstumpfs ausgebildet ist.

4. Sensorgehäuse (10) nach einem der vorangegangenen Ansprüche, **dadurch gekennzeichnet, dass** die Dichtflächen (26.1, 26.2) jeweils in einer Projektion entlang der Mittelachse (22) eine Fläche umschließen, wobei die Fläche kreisförmig oder oval ausgebildet ist.

5. Sensorgehäuse (10) nach einem der vorangegangenen Ansprüche, **dadurch gekennzeichnet, dass** eine der Dichtflächen (26.1, 26.2) als Verlängerung einer Innenfläche des Klemmraums ausgebildet ist.

6. Sensorgehäuse (10) nach einem der vorangegangenen Ansprüche, **dadurch gekennzeichnet, dass** das Sensorgehäuse dem IP 68 Standard oder dem IP 69K Standard entspricht.

7. Induktiver oder kapazitiver Näherungssensor, **dadurch gekennzeichnet, dass** der Näherungssensor ein Sensorgehäuse (10) gemäß einem der vorangegangenen Ansprüche aufweist

## Claims

1. Sensor housing (10) comprising a head part (12) with a sensor chamber for reception of a sensor and a connecting part (14), which adjoins the head part (12), with a terminal chamber for reception of a terminal connecting block, wherein
- the head part (12) has in a back wall adjoining the connecting part (14) a passage opening for the passage of electrical connections into the sensor chamber,
- the connecting part (14) comprises a terminal chamber lower part (16) and a terminal chamber cover (18),
- the terminal chamber lower part (16) and the terminal chamber cover (18) are assembled in a closing direction (20) so that the terminal chamber lower part (16) and the terminal chamber cover (18) adjoin one another and enclose the terminal chamber,
- the terminal chamber cover (18) is connected with the head part (12) by way of connecting means,
- the terminal chamber cover (18) has a side wall, which adjoins the back wall of the head part (12), with a passage opening, which at least partly overlaps the passage opening of the head part (12), for passage of electrical connections from the sensor chamber into the terminal chamber,
- the terminal chamber lower part (16) has a side wall with an inlet opening for cable and/or plug passage,
- the terminal chamber cover (18) and the terminal chamber lower part (16) each have a sealing surface (26.1, 26.2), wherein the sealing surfaces (26.1, 26.2) face one another,
- the sealing surfaces (26.1, 26.2) extend parallel to one another or to one another at an angle of at most 3°,
- the sealing surfaces (26) each extend along a closed curve about a centre axis (22), which extends parallel to the closing direction (20), of the connecting part (14) and
- an encircling sealing element for sealing the terminal chamber is arranged between the sealing surface (26.1) of the terminal chamber cover (18) and the sealing surface (26.2) of the terminal chamber lower part (16),
**characterised in that**
- the sealing surfaces (26.1, 26.2) respectively extend at an angle of at least 0° and at most 45° to the centre axis (22) so that a spacing between each sealing surface (26.1, 26.2) and the centre axis in closing direction (20) is constant or decreases.

2. Sensor housing (10) according to claim 1, **characterised in that** the sealing surface (26.1) of the terminal chamber cover (18) or the sealing surface (26.2) of the terminal chamber lower part (16) has a groove for reception of the sealing element.

3. Sensor housing (10) according to claim 1 or 2, **characterised in that** each sealing surface (26.1, 26.2) has the configuration of a circumferential surface of a cylinder or a frustum of a cone.

4. Sensor housing (10) according to any one of the preceding claims, **characterised in that** the sealing surfaces (26.1, 26.2) each enclose a surface in a projection along the centre axis (22), wherein the surface is formed to be circular or oval.

5. Sensor housing (10) according to any one of the preceding claims, **characterised in that** one of the sealing surfaces (26.1, 26.2) is formed as a prolongation of an inner surface of the terminal chamber.

6. Sensor housing (10) according to any one of the preceding claims, **characterised in that** the sensor housing corresponds with IP 68 Standard or IP 69K Standard.

7. inductive or capacitive proximity sensor, **characterised in that** the proximity sensor comprises a sensor housing (10) according to any one of the preceding claims.

## Revendications

1. Boîtier de détecteur (10) comprenant un élément de tête (12) avec une chambre de détecteur pour recevoir un détecteur et un élément de raccordement (14) contigu à l'élément de tête (12) avec une chambre de serrage pour recevoir un bloc de raccordement par serrage, dans lequel
- l'élément de tête (12) présente dans une paroi arrière contigüe à l'élément de raccordement (14) une ouverture de passage pour introduire des liaisons électriques dans la chambre de détecteur,
- l'élément de raccordement (14) comprend un socle de chambre de serrage (16) et un couvercle de chambre de serrage (18),
- le socle de chambre de serrage (16) et le couvercle de chambre de serrage (18) sont assemblés dans une direction de fermeture (20) de telle sorte que le socle de chambre de serrage (16) et le couvercle de chambre de serrage (18) s'ajustent et enveloppent la chambre de serrage,
- le couvercle de chambre de serrage (18) est raccordé avec l'élément de tête (12) au moyen d'un moyen de raccordement
- le couvercle de chambre de serrage (18) présente une paroi latérale contigüe à la paroi arrière de l'élément de tête (12) avec une ouverture de passage se chevauchant au moins avec l'ouverture de passage de l'élément de tête (12) pour faire passer des liaisons électriques de la chambre de détecteur à la chambre de serrage,
- le socle de chambre de serrage (16) présente une paroi latérale avec une ouverture d'entrée pour le passage de câbles et/ou de connecteurs,
- le couvercle de chambre de serrage (18) et le socle de chambre de serrage (16) présentent chacun une surface d'étanchéité (26.1, 26.2), lesquelles surfaces d'étanchéité (26.1, 26.2) sont disposées face à face,
- les surfaces d'étanchéité (26.1, 26.2) courent parallèlement entre elles ou forment entre elles un angle de 3° maximum,
- les surfaces d'étanchéité (26) courent chacune le long d'une courbe fermée autour d'un axe central (22) de l'élément de raccordement (14) courant parallèlement à la direction de fermeture (20) et
- un élément d'étanchéité périphérique est disposé entre la surface d'étanchéité (26.1) du couvercle de chambre de serrage (18) et la surface d'étanchéité (26.2) du socle de chambre de serrage (16) pour étanchéifier la chambre de serrage,
**caractérisé en ce que**
- les surfaces d'étanchéité (26,1, 26,2) courent chacune selon un angle de 0° minimum et de 45° maximum par rapport à l'axe central (22), de sorte qu'une distance entre chaque surface d'étanchéité (26,1, 26,2) et l'axe central dans la direction de fermeture (20) est constante ou diminue.

2. Boîtier de détecteur (10) selon la revendication 1, **caractérisé en ce que** la surface d'étanchéité (26.1) du couvercle de chambre de serrage (18) ou la surface d'étanchéité (26.2) du socle de chambre de serrage (16) présente une rainure pour recevoir l'élément d'étanchéité.

3. Boîtier de détecteur (10) selon la revendication 1 ou 2, **caractérisé en ce que** chaque surface d'étanchéité (26.1, 26.2) est configurée comme la surface extérieure d'un cylindre ou d'un cône tronqué.

4. Boîtier de détecteur (10) selon une des revendications précédentes, **caractérisé en ce que** les surfaces d'étanchéité (26.1, 26.2) entourent chacune une surface dans une projection le long de l'axe central (22), laquelle surface est de forme circulaire ou ovale.

5. Boîtier de détecteur (10) selon une des revendications précédentes, **caractérisé en ce qu'**une des surfaces d'étanchéité (26.1, 26.2) est configurée comme le prolongement d'une surface intérieure de la chambre de serrage.

6. Boîtier de détecteur (10) selon une des revendications précédentes, **caractérisé en ce que** ce boîtier de détecteur est conforme à la norme IP 68 ou à la norme IP69K.

7. Détecteur de proximité inductif ou capacitif, **caractérisé en ce que** ce détecteur de proximité comporte un boîtier de capteur (10) selon une des revendications précédentes.
